# EUROPEAN PATENT SPECIFICATION

(11) **EP 3 190 802 B1**
(45) Date of publication and mention of the grant of the patent: **13.11.2019**
(21) Application number: 15837383.7
(22) Date of filing: 05.02.2015
(51) Int. Cl.: H04Q 9/00, G08C 17/02

(54) **DIGITAL DEVICE AND CONTROL METHOD THEREFOR**
DIGITALE VORRICHTUNG UND STEUERUNGSVERFAHREN DAFÜR
DISPOSITIF NUMÉRIQUE ET SON PROCÉDÉ DE COMMANDE

(30) Priority: 01.09.2014 KR 20140115155
(43) Date of publication of application: 12.07.2017
(73) Proprietor: LG Electronics Inc., Yeongdeungpo-Gu Seoul 150-721 (KR)
(72) Inventor: HWANG, Sunho, Seoul 137-893 (KR); BAE, Kyungnam, Seoul 137-893 (KR); SHIN, Byounghyun, Seoul 137-893 (KR)
(74) Representative: Frenkel, Matthias Alexander
(86) International application number: PCT/KR2015/001193
(87) International publication number: WO 2016/035950

(56) References cited:
- EP-A1- 2 259 603
- WO-A1-2014/073903
- DE-A1- 4 226 053
- JP-A- 2010 109 410
- KR-A- 20130 092 082
- KR-A- 20130 096 423
- KR-A- 20140 047 390
- KR-A- 20140 061 060
- KR-A- 20140 097 300
- US-A1- 2006 227 032
- US-A1- 2013 027 193

## Description

### Technical Field

The present invention relates to a digital device, and more particularly, to a digital device and a control method therefor, in which a remote application of an external device may be executed automatically using a radio signal.

### Background Art

A digital device is a wireless communication protocol, and may support a Wi-Fi or bluetooth communication protocol.

This digital device corresponds to a cellular phone, a smart phone, a computer, a tablet PC, a notebook computer, a netbook computer, a TV(television), and other broadcast receiving device, for example.

A user may control each digital device by directly touching the digital device or remotely control the digital device by using a remote controller corresponding to each digital device.

EP 2 259 603 A1 discloses a remote operation system including an operation target apparatus and a remote operation apparatus. The operation target apparatus is operated with use of the remote operation apparatus. An operated-side first communication section and a operated-side second communication section of the operation target apparatus enable the operation target apparatus to communication with external devices. An operated-side communication control section transmits a remote controller ID to the remote operation apparatus via the operated-side second communication section. After determining a remote controller setting, the operated-side communication control section carries out data transmitting/receiving process. In the case of a plurality of remote operation apparatuses operating a single operation target apparatus, a remote controller restriction setting can be accessed. Based on the remote controller restriction setting, priorities for the different remote operation apparatuses are set and the inputs of said remote operation apparatuses are executed based on the corresponding priority.

### Disclosure

### Technical Problem

The present invention is defined by the independent claims. Specified embodiments are defined by the dependent claims. An object of the present invention according to one embodiment is to perform remote control simply and conveniently through various external devices for activating a remote application by transmitting a radio signal that includes remote control related information and receiving a remote control signal from the external devices that activate the remote application by receiving the radio signal.

Another object of the present invention according to another embodiment is to provide convenience to a user by reflecting whether a remote application of an external device has been activated by transmitting a unique key for remote control corresponding to a specific key for activating the remote application if the specific key is received from the external device.

The technical objects that can be achieved through the present invention are not limited to what has been particularly described hereinabove and other technical objects not described herein will be more clearly understood by persons skilled in the art from the following detailed description.

### Brief Description of the Drawings

FIG. 1 is a diagram illustrating a procedure of activating a remote application using a radio signal according to one embodiment of the present invention.
FIG. 2 is a detailed block diagram illustrating component modules of a digital device according to one embodiment of the present invention.
FIG. 3 is a detailed block diagram illustrating a controller shown in FIG. 2.
FIG. 4 is a detailed block diagram illustrating component modules of a digital device according to another embodiment of the present invention.
FIG. 5 is a detailed block diagram illustrating component modules of a digital device according to other embodiment of the present invention.
FIG. 6 is a diagram illustrating an example of performing remote control connection between an external device and a digital device according to one embodiment of the present invention.
FIG. 7 is a diagram illustrating an example of performing remote control connection between an external device and a digital device according to another embodiment of the present invention.
FIG. 8 is a diagram illustrating an example of performing remote control connection based on signal strength by means of a digital device according to an example useful for understanding the present invention.
FIG. 9 is a diagram illustrating an example of performing remote control connection based on signal strength by means of a digital device according to another an example useful for understanding the present invention.
FIG. 10 is a diagram illustrating an example of performing remote control connection based on a distance with an external device by means of a digital device according to one embodiment of the present invention.
FIGS. 11, 12a and 12b are diagrams illustrating an example of performing remote control connection based on a location of an external device by means of a digital device according to one embodiment of the present invention.
FIG. 13 is a diagram illustrating an example of performing remote control connection based on a location and distance of an external device by means of a digital device according to one embodiment of the present invention.
FIGS. 14a and 14b are diagrams illustrating an example of performing remote control connection based on a specific motion of an external device by means of a digital device according to one embodiment of the present invention.
FIGS. 15a to 15c are diagrams illustrating a remote window of a remote application executed by an external device according to one embodiment of the present invention.
FIG. 16 is a flow chart illustrating a control method of a digital device according to one embodiment of the present invention.
FIG. 17 is a flow chart illustrating a control method of a digital device according to another embodiment of the present invention.
FIGS. 18a and 18b are diagrams illustrating a remote window of a remote application executed by an external device according to another embodiment of the present invention.
FIGS. 19 and 20 are diagrams illustrating a remote application executed in accordance with a location of an external device according to one embodiment of the present invention.

### Best Mode for Carrying Out the Invention

Hereinafter, the embodiments of the present invention will be described in detail with reference to the accompanying drawings.

A suffix such as "module" and "unit" of elements used in the following description may be given to be merely intended to facilitate description of the specification, and the suffix "module" and "unit" may be used to refer to the same meaning or function.

Since a digital device disclosed in the present invention may freely be provided with or delete various applications on a general-purpose OS kernel, the digital device may perform user-friendly various functions. In more detail, the digital device may be implemented as a smart phone, a tablet PC, TV, etc., for example.

Moreover, although the embodiments of the present specification will be described in detail with reference to the accompanying drawings and the disclosure described by the drawings, it is to be understood that the present invention is not limited by such embodiments.

Although the terms used in this specification are selected from generally known and used terms considering their functions in the present specification, the terms may be modified depending on intention of a person skilled in the art, practices, or the advent of new technology. Also, in special case, the terms mentioned in the description of the present specification may be selected by the applicant at his or her discretion, the detailed meanings of which are described in relevant parts of the description herein. Accordingly, the terms used herein should be understood not simply by the actual terms used but by the meaning lying within and the description disclosed herein.

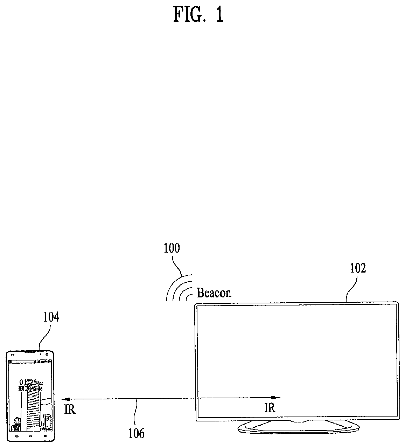

FIG. 1 is a diagram illustrating a procedure of activating a remote application using a radio signal according to one embodiment of the present invention.

As shown in FIG. 1, a digital device 102 may transmit a radio signal 100 that includes remote control related information, and an external device 104 may transmit a remote control signal 106 to the digital device 102 by receiving the radio signal 100 and activating a remote application.

In this case, the digital device is a wireless communication protocol, and may support a Wi-Fi or bluetooth communication protocol, and examples of the digital device 102 may include a cellular phone, a smart phone, a computer, a tablet PC, a notebook computer, a netbook computer, a TV (television), other broadcast receiving device, a display device, a refrigerator, a printer, a digital camera, and a projector.

Also, the radio signal 100 that includes remote control related information may be, but not limited to, a Wi-Fi signal or bluetooth signal that includes a beacon frame signal.

The external device 104 may be a mobile terminal that may be used on behalf of a remote controller of the digital device 102, and may include a mobile terminal such as a cellular phone, a smart phone, a tablet PC, a notebook computer, and a netbook computer.

Also, the digital device 102 transmits the radio signal 100 that includes remote control related information and receives the remote control signal 106 from the external device that has received the radio signal 100, and its operation may be controlled in accordance with the remote control signal 106 if a key code included in the received remote control signal 106 is a unique key code.

In this case, the remote control related information may be at least any one of a manufacturer name of the digital device 102, a model name of the digital device 102, a setup name of the digital device 102, a remote control unique key code of the digital device, information as to whether use of a remote application has been accepted, and information as to whether infrared transmission and reception may be performed.

The digital device 102 may periodically transmit the radio signal 100 that includes remote control related information.

Subsequently, the digital device 102 may receive the remote control signal 106 received from the external device 104 when the remote control signal 106 is an infrared signal for remote control. The digital device 102 extracts a key code from the received remote control signal 106 and compares the extracted key code with a previously stored unique key code. Then, if the extracted key code is the same as the previously stored unique key code, the operation of the digital device 102 may be controlled in accordance with the remote control signal 106.

Also, according to an example useful for understanding the invention, when a plurality of remote control signals 106 are simultaneously received from a plurality of external devices 104, the digital device 102 detects strength of the received remote control signal 106 and determines priorities in accordance with the detected strength of the remote control signals 106. The operation of the digital device 102 may be controlled in accordance with the remote control signal having the highest priority of the determined priorities.

As the case may be, the digital device 102 may further include a camera. In this case, the digital device 102 detects a location of the external device 104 by using the camera, and may receive the remote control signal from the external device 104 only if the location of the external device 104 is within the range of a previously set view angle.

In this case, the digital device 102 detects the location of the external device 104 by using the camera when the plurality of remote control signals 106 are received simultaneously from the plurality of external devices 104, and determines priorities in accordance with the detected location of the external device 104. The operation of the digital device 102 may be controlled in accordance with the remote control signal of the external device 104, which has the highest priority of the determined priorities.

As another case, the digital device 102 detects a motion operation of the external device 104 by using the camera when the remote control signal 106 is received from the external device 104, and identifies whether the key code included in the received remote control signal 106 is a unique key code if the detected motion operation of the external device 104 is a specific motion for remote control. Then, the operation of the digital device 102 may be controlled in accordance with the remote control signal 106.

As still another case, the digital device 102 detects whether the external device 104 is maintained in a horizontal direction for a certain time, by using the camera when the remote control signal 106 is received from the external device 104, and identifies whether the key code included in the received remote control signal 106 is a unique key code if the detected external device 104 is maintained in a horizontal direction for a certain time. Then, the operation of the digital device 102 may be controlled in accordance with the remote control signal 106.

Also, the digital device 102 may receive a signal, which includes a specific key code, from the external device 104 that has received the radio signal 100. The digital device 102 may detect the specific key code and transmit a unique key code for remote control if the detected specific key code is a unique key code request signal for remote control.

In this case, the external device 104 may periodically transmit the signal, which includes a specific key code, after receiving the radio signal 100.

At this time, the specific key code is a signal for allowing the external device 104 to request a unique key code for remotely controlling the digital device 102 by executing the remote application.

Therefore, since the digital device 102 may identify that the external device 103 intends to remotely control the digital device by executing the remote application, by receiving the specific key code from the external device 104, the digital device 102 may exactly perform the operation required for the user to provide convenience.

Also, since the external device 104 may periodically transmit the signal, which includes a specific key code, after receiving the radio signal 100 and remotely control the digital device 102 by executing the remote application only if a unique key code corresponding to the signal is received from the digital device 102, an unnecessary remote application which is not intended by the user may be prevented from being executed.

As the case may be, the external device 104 may periodically transmit the signal, which includes a specific key code, only when a specific motion operation is performed.

For example, if the specific motion operation is an operation for drawing a circle, the external device 104 may periodically transmit the signal, which includes a specific key code, if the motion operation for drawing a circle is performed and remotely control the digital device 102, which has transmitted a unique key code corresponding to the signal, by executing the remote application if the unique key code corresponding to the signal is received from.

Therefore, the external device 104 may prevent an unnecessary remote application which is not intended by the user from being executed.

As another case, the external device 104 may periodically transmit the signal, which includes a specific key code, only when the external device 104 is maintained in a horizontal direction for a certain time.

For example, if the external device 104 is maintained in a horizontal direction toward the digital device 102 for 3 seconds, the external device 104 may periodically transmit the signal, which includes a specific key code, and if a unique key code corresponding to the signal is received, may execute the remote application to remotely control the digital device 102 that has transmitted the unique key code.

Therefore, the external device 104 may prevent an unnecessary remote application which is not intended by the user from being executed.

As described above, if the unique key code for remote control is received from the digital device 102, the external device 104 may execute the remote application automatically.

As the case may be, the external device 104 may receive the unique key for remote control from the digital device 102 after the remote application is executed.

Also, if the radio signal 100 that includes remote control related information is received from the digital device 102, the external device 104 identifies whether the remote application may be executed, by analyzing the remote control related information. If the remote application may be executed, the external device 104 identifies whether signal strength of the received radio signal 100 is a reference value or more, and may execute the remote application automatically if signal strength of the radio signal 100 is the reference value or more.

If signal strength of the radio signal 100 is the reference value or less, the external device 104 may not execute the remote application.

Also, if a plurality of radio signals are received from a plurality of digital devices 102, the external device 104 may automatically execute a plurality of remote applications corresponding to the respective digital devices 102.

In this case, the external device 104 may display a plurality of remote windows corresponding to the plurality of remote applications on a screen when automatically executing the plurality of remote applications.

At this time, a size of the plurality of remote windows may be varied depending on signal strength of the received radio signal 100.

For example, the remote window may become great if signal strength of the received radio signal 100 becomes great, and may become small if signal strength of the received radio signal 100 becomes small.

As described above, the digital device according to the present invention may transmit the radio signal that includes remote control related information, and may receive the remote control signal from the external devices that have activated the remote application by receiving the radio signal, whereby remote control may be performed simply and conveniently through the various external devices that have activated the remote application.

Also, the digital device according to the present invention may transmit the unique key for remote control, which corresponds to a specific key for activating the remote application, if the specific key is received from the external device, thereby providing convenience to the user by reflecting whether the remote application of the external device has been activated.

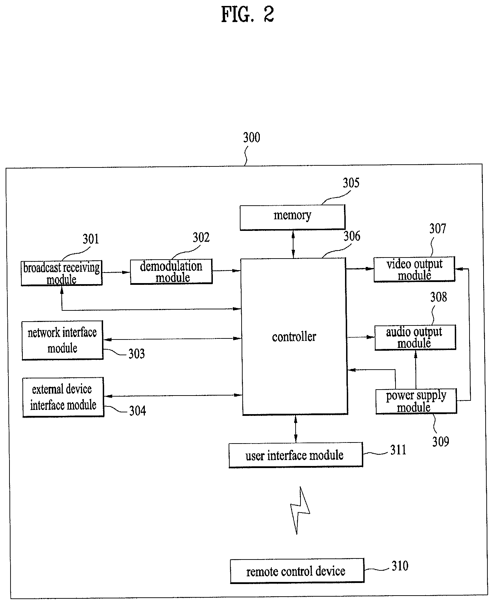

FIG. 2 is a detailed block diagram illustrating component modules of a digital device according to one embodiment of the present invention.

As shown in FIG. 2, the digital device 300 according to one embodiment of the present invention includes a broadcast receiving module 301, a demodulation module 302, a network interface module 303, an external device interface module 304, a memory 305, a controller 306, a video output module 307, an audio output module 308, a power supply module 309, a remote control device 310, and a user interface module 311.

Meanwhile, the digital device 300 may be designed to perform data communication with a remote controller corresponding to the remote control device 310, and the remote control device will be described as the remote controller.

In this case, the broadcast receiving module 301 may be designed as an RF tuner, for example, or may be designed as an interface that receives broadcast data from an external device such as STB. The broadcast receiving module 301 may receive RF broadcast signal of a single carrier based on an advanced television system committee (ATSC) mode or RF broadcast signal of multiple carriers based on a digital video broadcasting (DVB) mode.

The demodulation module 302 performs a demodulation operation by receiving a digital IF (DIF) signal converted by the broadcast receiving module 301. For example, if the digital IF signal output from the broadcast receiving module 301 is based on the ATSC mode, the demodulation module 302 performs 8-vestigal side band (8-VSB) demodulation, for example. Also, the demodulation module 302 may perform channel decoding.

The external device interface module 304 is an interface that enables data communication between the external device and the display device 300. The external device interface module 304 may be connected to the external device such as Digital Versatile Disk (DVD), Blu-ray, game device, camera, camcorder, computer (e.g., notebook computer), STB etc. through wire/wireless cables. The external device interface module 304 transmits a video, audio, or data signal externally input through the external device connected thereto, to the controller 306. Also, the external device interface module 304 may output the video, audio or data signal processed by the controller 306 to the external device. The external device interface module 304 may include a USB terminal, a composite Video Banking Sync (CVBS) terminal, a component terminal, an S-video terminal (analog), a Digital Visual Interface (DVI) terminal, a High Definition Multimedia Interface (HDMI) terminal, an RGB terminal, a D-SUB terminal, etc., for example.

The network interface module 303 provides an interface for connecting the digital device 300 with wire/wireless networks including Internet network. The network interface module 303 may include an Ethernet terminal, for example, for wire network connection. For example, Wireless LAN (WLAN)(Wi-Fi), Wireless broadband (Wibro), World Interoperability for Microwave Access (Wimax), High Speed Downlink Packet Access (HSDPA) communication specifications may be used by the network interface module 303 for the wireless network connection. The network interface module 303 may transmit or receive data to and from other users or other digital devices through a network connected thereto or another network linked on the connected network.

The memory 305 may store a program for processing and controlling each signal of the controller 306, or may store the processed video, audio or data signal. Also, the memory 305 may temporarily store the video, audio or data signal input from the external device interface module 304 or the network interface module 303. The memory 305 may store various OS, middleware and platforms, for example, therein.

The user input interface module 311 transmits the signal input by the user to the controller 306 or transmits the signal from the controller 306 to the external device (for example, remote controller 310). For example, the user interface module 311 may be designed to receive and process a control signal such as power on/off, channel selection and screen setup from the remote controller 310 in accordance with various communication modes such as RF (radio frequency) communication mode and IR communication mode, or to transmit the control signal from the controller 306 to the remote controller 310.

The controller 306 demultiplexes streams input through the broadcast receiving module 301, the demodulation module 302, the network interface module 303 or the external device interface module 304, or processes the demultiplexed signals to generate and output a signal for a video or audio output.

The video output module 307 converts a video signal, a data signal and an OSD signal, which are processed by the controller 306, or a video signal and a data signal, which are received from the external device interface module 304, to R, G, B signals, respectively, thereby generating driving signals. Examples of the video output module 307 include PDP, LCD, OLED, flexible display, and 3D display.

The audio output module 308 outputs the signal audio-processed by the controller 306, for example, stereo signal, 3.1 channel signal or 5.1 channel signal, as audio. Various types of speakers may be used as the audio output module 308.

The power supply module 309 supplies the corresponding power to the whole portion of the digital device 300. In particular, the power supply module 309 may supply the power to the controller 306 that may be implemented in the form of a system on chip (SOC), the video output module 307 for image display, and the audio output module 308 for audio output.

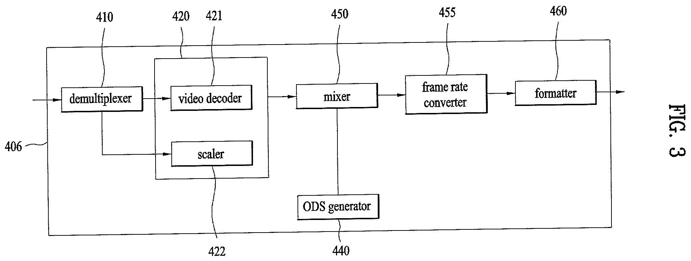

FIG. 3 is a detailed block diagram illustrating the controller shown in FIG. 2.

As shown in FIG. 3, the controller 406 of the digital device includes a demultiplexer 410, a video processor 420, an OSD generator 440, a mixer 450, a frame rate converter 455, and a formatter 460. Also, the controller 406 may be designed to further include an audio processor (not shown) and a data processor (not shown).

The demultiplexer 410 demultipelxes input streams. For example, if MPEG-2 TS is input, the demultiplexer 410 demultiplexes the MPEG-2 TS and splits the demultiplexed MPEG-2 TS into a video signal, an audio signal and a data signal.

The video processor 420 may process the demultiplexed video signal. To this end, the video processor 420 may include a video decoder 421 and a scaler 422. The video decoder 421 decodes the demultiplexed video signal, and the scaler 422 performs scaling to output resolution of the decoded video signal through the video output module. The video signal decoded by the video processor 420 is input to the mixer 450.

The OSD generator 440 generates an OSD signal in accordance with a user input or by itself. Accordingly, the mixer 450 may mix the OSD signal generated by the OSD generator 440 with the decoded video signal processed by the video processor 420. The mixed signal is provided to the formatter 460. As the decoded broadcast video signal or the external input signal is mixed with the OSD signal, the OSD may be overlaid on the broadcast video or the external input video.

The frame rate converter (FRC) 455 may convert a frame rate of the input video. For example, the frame rate converter 455 may convert a frame rate of 60Hz to a frame rate of 120Hz or 240Hz.

The formatter 460 receives an output signal converted by the frame rate converter 455, changes a format of the signal to conform to the video output module, and then outputs the changed format. For example, the formatter 460 may output R, G, B data signals. The R, G, B data signals may be output as low voltage differential signaling (LVDS) or mini-LVDS.

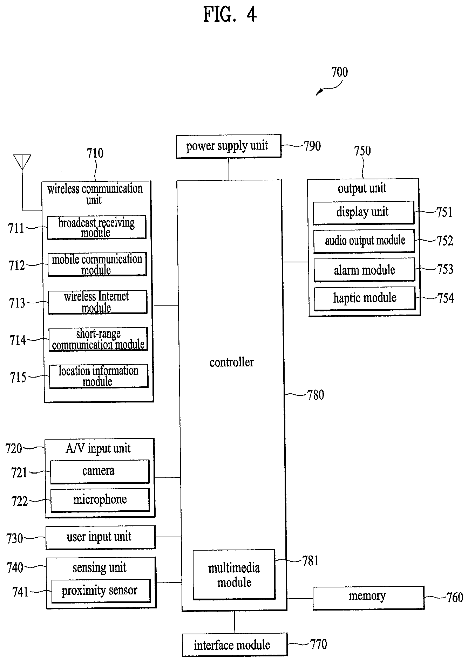

FIG. 4 is a detailed block diagram illustrating component modules of a digital device according to another embodiment of the present invention.

As shown in FIG. 4, the digital device 700 may include a wireless communication module 710, A/V (Audio/Video) input module 720, a user input module 730, a sensing module 740, an output module 750, a memory 760, an interface module 770, a controller 780, and a power supply module 790. Since the components shown in FIG. 4 are not necessarily required, the digital device 700 which includes more components or less components than those shown in FIG. 4 may be implemented.

The wireless communication unit 710 typically includes one or more components which permit wireless communication between the digital device 700 and a wireless communication system or network within which the digital device 700 is located. For instance, the wireless communication unit 710 can include a broadcast receiving module 711, a mobile communication module 712, a wireless Internet module 713, a short-range communication module 714, and a position-location module 715.

The broadcast receiving module 711 receives a broadcast signal and/or broadcast associated information from an external broadcast managing server via a broadcast channel. The broadcast channel may include a satellite channel and a terrestrial channel. At least two broadcast receiving modules can be provided in the digital device 700 to facilitate simultaneous reception of at least two broadcast channels or broadcast channel switching. The broadcast associated information includes information associated with a broadcast channel, a broadcast program, or a broadcast service provider. Furthermore, the broadcast associated information can be provided via a mobile communication network. In this case, the broadcast associated information can be received by the mobile communication module 712. The broadcast associated information can be implemented in various forms. For instance, broadcast associated information may include an electronic program guide (EPG) of digital multimedia broadcasting (DMB) and an electronic service guide (ESG) of digital video broadcast-handheld (DVB-H). The broadcast receiving module 311 may be configured to receive broadcast signals transmitted from various types of broadcast systems. By non-limiting example, such broadcasting systems may include digital multimedia broadcasting-terrestrial (DMB-T), digital multimedia broadcasting-satellite (DMB-S), digital video broadcast-handheld (DVB-H), digital video broadcast-convergence of broadcasting and mobile services (DVB-CBMS), Open Mobile Alliance Broadcast (OMA-BCAST), the data broadcasting system known as media forward link only (MediaFLOTM) and integrated services digital broadcast-terrestrial (ISDB-T). Optionally, the broadcast receiving module 711 can be configured to be suitable for other broadcasting systems as well as the above-noted digital broadcasting systems. The broadcast signal and/or broadcast associated information received by the broadcast receiving module 711 may be stored in a suitable device, such as the memory 760.

The mobile communication module 712 transmits/receives wireless signals to/from one or more network entities (e.g., a base station, an external terminal, and/or a server) via a mobile network such as GSM (Global System for Mobile communications), CDMA (Code Division Multiple Access), or WCDMA (Wideband CDMA). Such wireless signals may carry audio, video, and data according to text/multimedia messages.

The wireless Internet module 713 supports Internet access for the digital device 700. This module may be internally or externally coupled to the digital device 700. The wireless Internet technology can include WLAN (Wireless LAN), Wi-Fi, WibroTM (Wireless broadband), WimaxTM (World Interoperability for Microwave Access), HSDPA (High Speed Downlink Packet Access), GSM, CDMA, WCDMA, or LTE (Long Term Evolution) .

The short-range communication module 714 facilitates relatively short-range communications. Suitable technologies for implementing this module include radio frequency identification (RFID), infrared data association (IrDA), ultra-wideband (UWB), as well as the networking technologies commonly referred to as BluetoothTM and ZigBeeTM, to name a few.

The position-location module 715 identifies or otherwise obtains the location of the digital device 700. According to one embodiment, this module may be implemented with a global positioning system (GPS) module.

With continued reference to FIG. 4, the audio/video (A/V) input unit 720 is configured to provide audio or video signal input to the digital device 700. As shown, the A/V input unit 720 includes a camera 721 and a microphone 722. The camera 721 receives and processes image frames of still pictures or video, which are obtained by an image sensor in a video call mode or a photographing mode. Furthermore, the processed image frames can be displayed on the display 751.

The image frames processed by the camera 721 can be stored in the memory 760 or can be transmitted to an external recipient via the wireless communication unit 710. Optionally, at least two cameras 721 can be provided in the digital device 700 according to the environment of usage.

The microphone 722 receives an external audio signal while the portable device is in a particular mode, such as phone call mode, recording mode and voice recognition. This audio signal is processed and converted into electronic audio data. The processed audio data is transformed into a format transmittable to a mobile communication base station via the mobile communication module 712 in a call mode. The microphone 722 typically includes assorted noise removing algorithms to remove noise generated in the course of receiving the external audio signal.

The user input unit 730 generates input data responsive to user manipulation of an associated input device or devices. Examples of such devices include a keypad, a dome switch, a touchpad (e.g., static pressure/capacitance), a jog wheel, and a jog switch.

The sensing unit 740 provides sensing signals for controlling operations of the digital device 700 using status measurements of various aspects of the digital device 700. For instance, the sensing unit 740 may detect an open/closed status of the digital device 700, the relative positioning of components (e.g., a display and keypad) of the digital device 700, a change of position (or location) of the digital device 700 or a component of the digital device 700, a presence or absence of user contact with the digital device 700, and an orientation or acceleration/deceleration of the digital device 700. As an example, a digital device 700 configured as a slide-type mobile terminal is considered. In this configuration, the sensing unit 740 may sense whether a sliding portion of the mobile terminal is open or closed. According to other examples, the sensing unit 740 senses the presence or absence of power provided by the power supply unit 790, and the presence or absence of a coupling or other connection between the interface unit 770 and an external device. According to one embodiment, the sensing unit 740 can include a proximity sensor 741.

The output unit 750 generates output relevant to the senses of sight, hearing, and touch. Furthermore, the output unit 750 includes the display 751, an audio output module 752, an alarm unit 753, and a haptic module 754.

The display 751 is typically implemented to visually display (output) information associated with the digital device 700. For instance, if the mobile terminal is operating in a phone call mode, the display will generally provide a user interface (UI) or graphical user interface (GUI) which includes information associated with placing, conducting, and terminating a phone call. As another example, if the digital device 700 is in a video call mode or a photographing mode, the display 751 may additionally or alternatively display images which are associated with these modes, the UI or the GUI.

The display module 751 may be implemented using known display technologies. These technologies include, for example, a liquid crystal display (LCD), a thin film transistor-liquid crystal display (TFT-LCD), an organic light-emitting diode display (OLED), a flexible display and a three-dimensional display. The digital device 700 may include one or more of such displays.

Some of the displays can be implemented in a transparent or optical transmittive type, i.e., a transparent display. A representative example of the transparent display is the TOLED (transparent OLED). A rear configuration of the display 751 can be implemented as the optical transmittive type as well. In this configuration, a user may be able to see an object located at the rear of a terminal body on a portion of the display 751 of the terminal body.

At least two displays 751 can be provided in the digital device 700 in accordance with one embodiment of the digital device 700. For instance, a plurality of displays can be arranged to be spaced apart from each other or to form a single body on a single face of the digital device 700. Alternatively, a plurality of displays can be arranged on different faces of the digital device 700.

If the display 751 and a sensor for detecting a touch action (hereinafter called 'touch sensor') are configured as a mutual layer structure (hereinafter called 'touch screen'), the display 751 is usable as an input device as well as an output device. In this case, the touch sensor can be configured as a touch film, a touch sheet, or a touchpad.

The touch sensor can be configured to convert pressure applied to a specific portion of the display 751 or a variation of capacitance generated from a specific portion of the display 751 to an electronic input signal. Moreover, the touch sensor is configurable to detect pressure of a touch as well as a touched position or size.

If a touch input is made to the touch sensor, a signal(s) corresponding to the touch input is transferred to a touch controller. The touch controller processes the signal(s) and then transfers the processed signal(s) to the controller 780. Therefore, the controller 780 is made aware when a prescribed portion of the display 751 is touched. Referring to FIG. 4, a proximity sensor 741 can be provided at an internal area of the digital device 700 enclosed by the touch screen or around the touch screen. The proximity sensor is a sensor that detects a presence or non-presence of an object approaching a prescribed detecting surface or an object existing (or located) around the proximity sensor using an electromagnetic field strength or infrared ray without mechanical contact. Hence, the proximity sensor 741 is more durable than a contact type sensor and also has utility broader than the contact type sensor. The proximity sensor 741 can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, and an infrared proximity sensor. If the touch screen includes the electrostatic capacity proximity sensor, it is configured to detect the proximity of a pointer using a variation of an electric field according to the proximity of the pointer. In this configuration, the touch screen (touch sensor) can be considered as the proximity sensor.

The audio output module 752 functions in various modes including a call-receiving mode, a call-placing mode, a recording mode, a voice recognition mode, and a broadcast reception mode to output audio data which is received from the wireless communication unit 710 or is stored in the memory 760. During operation, the audio output module 752 outputs audio relating to a particular function (e.g., call received, message received). The audio output module 752 may be implemented using one or more speakers, buzzers, other audio producing devices, and combinations of these devices.

The alarm unit 753 outputs a signal for announcing the occurrence of a particular event associated with the digital device 700. Typical events include a call received, a message received and a touch input received. The alarm unit 753 is able to output a signal for announcing the event occurrence by way of vibration as well as video or audio signal. The video or audio signal can be output via the display 751 or the audio output module 752. Hence, the display 751 or the audio output module 752 can be regarded as a part of the alarm unit 753.

The haptic module 754 generates various tactile effects that can be sensed by a user. Vibration is a representative one of the tactile effects generated by the haptic module 754. The strength and pattern of the vibration generated by the haptic module 754 are controllable. For instance, different vibrations can be output in a manner of being synthesized together or can be output in sequence.

The haptic module 754 is able to generate various tactile effects as well as the vibration. For instance, the haptic module 754 may generate an effect attributed to the arrangement of pins vertically moving against a contact skin surface, an effect attributed to the injection/suction power of air though an injection/suction hole, an effect attributed to the skim over a skin surface, an effect attributed to a contact with an electrode, an effect attributed to an electrostatic force, and an effect attributed to the representation of a hot/cold sense using an endothermic or exothermic device.

The haptic module 754 can be implemented to enable a user to sense the tactile effect through a muscle sense of a finger or an arm as well as to transfer the tactile effect through direct contact. Optionally, at least two haptic modules 754 can be provided in the digital device 700 in accordance with an embodiment of the digital device 700.

The memory 760 is generally used to store various types of data to support the processing, control, and storage requirements of the digital device 700. Examples of such data include program instructions for applications operating on the digital device 700, contact data, phonebook data, messages, audio, still pictures (or photo), and moving pictures. Furthermore, a recent use history or a cumulative use frequency of each data (e.g., use frequency for each phonebook, each message or each multimedia file) can be stored in the memory 760. Moreover, data for various patterns of vibration and/or sound output in response to a touch input to the touch screen can be stored in the memory 760. The memory 760 may be implemented using any type or combination of suitable volatile and nonvolatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory or XD memory), or other similar memory or data storage device. Furthermore, the digital device 700 is able to operate in association with a web storage for performing a storage function of the memory 760 on the Internet.

The interface unit 770 may be implemented to couple the digital device 700 with external devices. The interface unit 770 receives data from the external devices or is supplied with power and then transfers the data or power to the respective elements of the digital device 700 or enables data within the digital device 700 to be transferred to the external devices. The interface unit 770 may be configured using a wired/wireless headset port, an external charger port, a wired/wireless data port, a memory card port, a port for coupling to a device having an identity module, audio input/output ports, video input/output ports, and/or an earphone port.

The identity module is a chip for storing various kinds of information for authenticating a usage authority of the digital device 700 and can include a User Identify Module (UIM), a Subscriber Identity Module (SIM), and/or a Universal Subscriber Identity Module (USIM). A device having the identity module (hereinafter called 'identity device') can be manufactured as a smart card. Therefore, the identity device is connectible to the digital device 700 via the corresponding port.

When the digital device 700 is connected to an external cradle, the interface unit 770 becomes a passage for supplying the digital device 700 with a power from the cradle or a passage for delivering various command signals input from the cradle by a user to the digital device 700. Each of the various command signals input from the cradle or the power can operate as a signal enabling the digital device 700 to recognize that it is correctly loaded in the cradle.

The controller 780 typically controls the overall operations of the digital device 700. For example, the controller 780 performs the control and processing associated with voice calls, data communications, and video calls. The controller 780 may include a multimedia module 781 that provides multimedia playback. The multimedia module 781 may be configured as part of the controller 780, or implemented as a separate component.

Moreover, the controller 780 is able to perform a pattern (or image) recognizing process for recognizing a writing input and a picture drawing input carried out on the touch screen as characters or images, respectively.

The power supply unit 790 provides power required by various components of the digital device 700. The power may be internal power, external power, or combinations of internal and external power.

Various embodiments described herein may be implemented in a computer-readable medium using, for example, computer software, hardware, or some combination of computer software and hardware. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 780.

For a software implementation, the embodiments described herein may be implemented with separate software modules, such as procedures and functions, each of which performs one or more of the functions and operations described herein. The software codes can be implemented with a software application written in any suitable programming language and may be stored in memory such as the memory 760, and executed by a controller or processor, such as the controller 780.

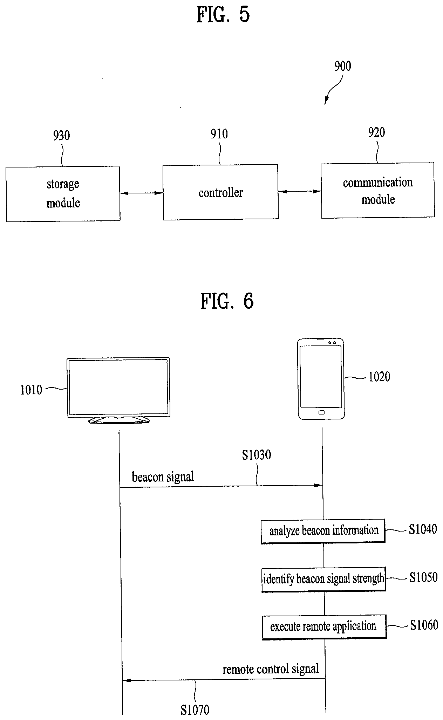

FIG. 5 is a detailed block diagram illustrating component modules of a digital device according to other embodiment of the present invention. Some modules of the digital device of FIG. 5 may be added or modified with reference to FIGS. 1 to 4, and the scope of the present invention should basically be construed in accordance with the recitation cited in claims without being determined by the components disclosed in FIGS. 1 to 5.

As shown in FIG. 5, the digital device 900 includes a controller 910, a communication module 920, and a storage module 930.

In this case, the communication module 920 may transmit remote control related information, and may connect Wi-Fi for performing wireless communication between devices. The communication module 920 may connect various wireless communications such as bluetooth, infrared communication and NFC (Near Field Communication) in addition to Wi-Fi. Also, the communication module 920 may receive a signal transmitted from an external input means such as a remote controller.

Subsequently, the storage module 930 may store remote control related information. In this case, the remote control related information may be at least any one of, but not limited to, a manufacturer name of the digital device, a model name of the digital device, a setup name of the digital device, a remote control unique key code of the digital device, information as to whether use of a remote application has been accepted, and information as to whether infrared transmission and reception may be performed.

Next, the controller 920 may control the operation of the digital device 900, and performs a function of wholly managing functions of at least one or more of the modules shown in FIG. 5, such as the communication module 920 and the storage module 930.

In this case, the controller 910 transmits a radio signal that includes remote control related information, and receives the remote control signal from the external device that has received the radio signal. If a key code included in the received remote control signal is a unique key code, the controller 910 may control the operation of the digital device 900 in accordance with the remote control signal. The controller 910 may periodically transmit the radio signal, which includes the remote control related information, through the communication module 920. Also, when the remote control signal received from the external device is an infrared signal for remote control, the controller 910 may receive the infrared signal through the communication module 920.

FIG. 6 is a diagram illustrating an example of performing remote control connection between an external device and a digital device according to one embodiment of the present invention.

As shown in FIG. 6, the controller of the digital device 1010 according to one embodiment of the present invention transmits a radio signal that includes remote control related information (S1030). In this case, the radio signal that includes remote control related information may be transmitted periodically. Also, if the radio signal that includes remote control related information is received, the external device 1020 identifies whether a remote application may be executed, by analyzing the remote control related information (S1040). If it is determined that the remote application may be executed, the external device 1020 identifies whether signal strength of the received radio signal is a reference value or more (S1050), and then executes the remote application automatically if signal strength of the radio signal is the reference value or more (S1060). The external device 1020 may display a remote window corresponding to the remote application on a screen and transmit a remote control signal to the digital device 1010 in accordance with a user input (S1070). Subsequently, if the remote control signal is received from the external device 1020 that has received the radio signal, the digital device 1010 extracts a key code from the received remote control signal and compares the extracted key code with a previously stored unique key code. Then, if the extracted key code is the same as the previously stored unique key code, the operation of the digital device 1010 may be controlled in accordance with the remote control signal.

Also, when executing the remote application, the external device 1020 may prevent an unnecessary remote application which is not intended by the user from being executed. For example, the external device 1020 may execute the remote application only when a specific motion operation is performed. For example, if the specific motion operation is an operation for drawing a circle, the external device 1020 may execute the remote application. As another case, the external device 1020 may execute the remote application only when the external device is maintained in a horizontal direction for a certain time. For example, if the external device 1020 is maintained in a horizontal direction toward the digital device 1010 for 3 seconds, the external device 1020 may execute the remote application. Therefore, the external device 1020 may prevent an unnecessary remote application which is not intended by the user from being executed.

As described above, the digital device according to the present invention may transmit the radio signal that includes remote control related information, and may receive the remote control signal from the external devices that have activated the remote application by receiving the radio signal, whereby remote control may be performed simply and conveniently through the various external devices that have activated the remote application.

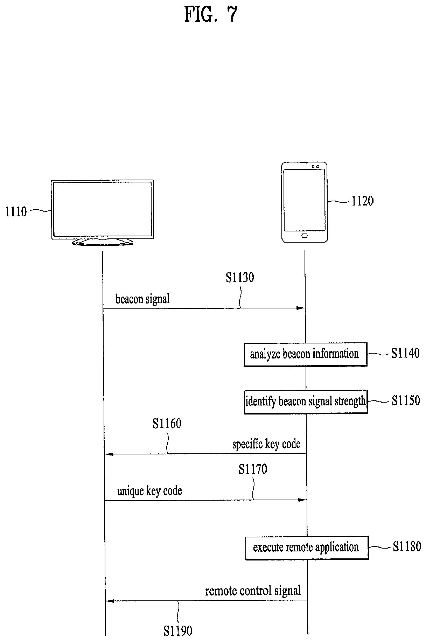

FIG. 7 is a diagram illustrating an example of performing remote control connection between an external device and a digital device according to another embodiment of the present invention.

As shown in FIG. 7, the controller of the digital device 1110 according to one embodiment of the present invention transmits a radio signal that includes remote control related information (S1130). In this case, the radio signal that includes remote control related information may be transmitted periodically. Also, if the radio signal that includes remote control related information is received, the external device 1120 identifies whether a remote application may be executed, by analyzing the remote control related information (S1140). Subsequently, if it is determined that the remote application may be executed, the external device 1120 identifies whether signal strength of the received radio signal is a reference value or more (S1150). Then, the external device 1120 may periodically transmit a signal, which includes a specific key code, to the digital device 1110 if signal strength of the radio signal is the reference value or more (S1160). In this case, the specific key code may be a signal for requesting a unique key code for remotely controlling the digital device 1110. Subsequently, the controller of the digital device 1110 may detect the specific key code if the signal that includes the specific key code is received from the external device 1120, and may transmit the unique key code for remote control to the external device 1120 if the detected specific key code is a unique key code request signal for remote control (S1170). Next, if the unique key code for remote control is received, the external device 1120 executes a remote application automatically (S1180). The external device 1120 may display a remote window corresponding to the remote application on a screen and transmit a remote control signal to the digital device 1110 in accordance with a user input (S1190). Subsequently, if the digital device 111 receives the remote control signal from the external device 1120 that has received the radio signal, the operation of the digital device 1110 may be controlled in accordance with the received remote control signal. As the case may be, the external device 1120 may previously execute the remote application when transmitting the specific key code before the unique key code for remote control is received.

As described above, since the external device 1120 may remotely control the digital device 1110 by executing the remote application only when periodically transmitting the specific key code and receiving the unique key code corresponding to the specific key code from the digital device 110, the external device 1120 may prevent an unnecessary remote application which is not intended by the user from being executed. As the case may be, the external device 1120 may periodically transmit the signal, which includes the specific key code, only when a specific motion operation is performed. For example, if the specific motion operation is an operation for drawing a circle, the external device 1120 may periodically transmit the signal, which includes the specific key code, and may execute the remote application if the unique key code corresponding to the specific key code is received, whereby the external device 1120 may remotely control the digital device 1110 that has transmitted the unique key code. As another case, the external device 1120 may periodically transmit the signal, which includes the specific key code, only when the external device is maintained in a horizontal direction for a certain time. For example, if the external device 1120 is maintained in a horizontal direction toward the digital device 1110 for 3 seconds, the external device 1120 may periodically transmit the signal, which includes the specific key code, and may remotely control the digital device 1110 that has transmitted the unique key code, by executing the remote application if the unique key code corresponding to the specific key code is received. Therefore, the external device 1120 may prevent an unnecessary remote application which is not intended by the user from being executed.

As described above, the digital device according to the present invention may transmit the unique key for remote control, which corresponds to the specific key, if the specific key for activating the remote application is received from the external device, thereby providing convenience to the user by reflecting whether the remote application of the external device has been activated.

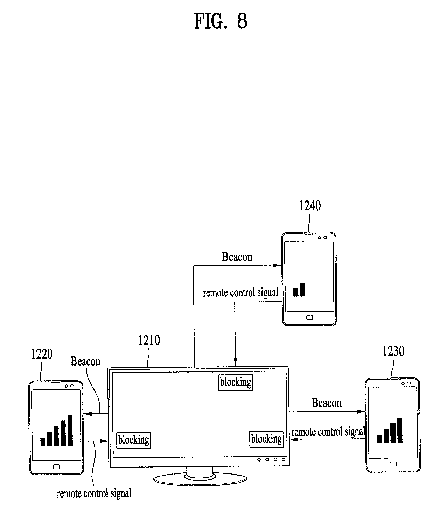

FIG. 8 is a diagram illustrating an example of performing remote control connection based on signal strength by means of a digital device according to an example useful for understanding the present invention.

As shown in FIG. 8, the controller of the digital device 1210 transmits a radio signal that includes remote control related information. In this case, the radio signal that includes remote control related information may be transmitted periodically. Also, if the radio signal that includes remote control related information is received, a plurality of external devices 1220, 1230 and 1240 identify whether a remote application may be executed, by analyzing the remote control related information. Subsequently, if it is determined that the remote application may be executed, the plurality of external devices 1220, 1230 and 1240 execute the remote application automatically, display a remote window corresponding to the remote application on a screen, and then transmit the remote control signal to the digital device 1210 in accordance with a user input. Subsequently, when a plurality of remote control signals are simultaneously received from the plurality of external devices 1220, 1230 and 1240, the controller of the digital device 1210 detects strength of the received remote control signals and determines priorities in accordance with the detected strength of the remote control signals. The operation of the digital device 1210 may be controlled in accordance with the remote control signal having the highest priority of the determined priorities. As shown in FIG. 8, the controller of the digital device 1210 may receive the remote control signal of the external device 1220 which has the greatest strength of the remote control signal, and may block the remote control signals of the other external devices 1230 and 1240. In this case, the plurality of external devices 1220, 1230 and 1240 may be the same type of devices, and may be smart phones, for example.

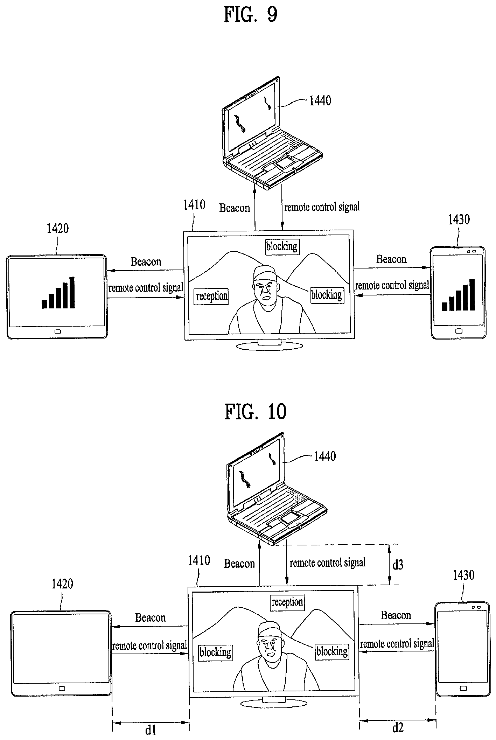

FIG. 9 is a diagram illustrating an example of performing remote control connection based on signal strength by means of a digital device according to another example useful for understanding the present invention.

As shown in FIG. 9, the controller of the digital device 1410 transmits a radio signal that includes remote control related information. In this case, the radio signal that includes remote control related information may be transmitted periodically. Also, if the radio signal that includes remote control related information is received, a plurality of external devices 1420, 1430 and 1440 identify whether a remote application may be executed, by analyzing the remote control related information. Subsequently, if it is determined that the remote application may be executed, the plurality of external devices 1420, 1430 and 1440 execute the remote application automatically, display a remote window corresponding to the remote application on a screen, and then transmit the remote control signal to the digital device 1410 in accordance with a user input. Subsequently, when a plurality of remote control signals are simultaneously received from the plurality of external devices 1420, 1430 and 1440, the controller of the digital device 1410 detects strength of the received remote control signals and determines priorities in accordance with the detected strength of the remote control signals. The operation of the digital device 1410 may be controlled in accordance with the remote control signal having the highest priority of the determined priorities. As shown in FIG. 9, the controller of the digital device 1410 may receive the remote control signal of the external device 1420 which has the greatest strength of the remote control signal, and may block the remote control signals of the other external devices 1430 and 1440. In this case, the plurality of external devices 1420, 1430 and 1440 may be different types of devices different from one another, and may be a tablet PC 1420, a smart phone 1430, and a notebook computer 1440, respectively.

FIG. 10 is a diagram illustrating an example of performing remote control connection based on a distance with an external device by means of a digital device according to one embodiment of the present invention.

As shown in FIG. 10, the controller of the digital device 1410 transmits a radio signal that includes remote control related information. In this case, the radio signal that includes remote control related information may be transmitted periodically. Also, if the radio signal that includes remote control related information is received, a plurality of external devices 1420, 1430 and 1440 identify whether a remote application may be executed, by analyzing the remote control related information. Subsequently, if it is determined that the remote application may be executed, the plurality of external devices 1420, 1430 and 1440 execute the remote application automatically, display a remote window corresponding to the remote application on a screen, and then transmit the remote control signal to the digital device 1410 in accordance with a user input. Subsequently, when a plurality of remote control signals are simultaneously received from the plurality of external devices 1420, 1430 and 1440, the controller of the digital device 1410 detects locations of the external devices 1420, 1430 and 1440 by using a camera, measures a distance between the detected external devices 1420, 1430 and 1440 and the digital device 1410 and then determines priorities in accordance with the measured distance. The operation of the digital device 1410 may be controlled in accordance with the remote control signal having the highest priority of the determined priorities. As shown in FIG. 10, the controller of the digital device 1410 may receive the remote control signal of the external device 1440 which has a distance d3 closest to the digital device 1410, and may block the remote control signals of the other external devices 1420 and 1430, which have distances d1 and d2 far away from the digital device 1410. In this case, the plurality of external devices 1420, 1430 and 1440 may be different types of devices different from one another, and may be a netbook computer 1420, a smart phone 1430, and a notebook computer 1440, respectively. As the case may be, the plurality of external devices 1220, 1230 and 1240 may be the same type of devices, and may be smart phones, for example.

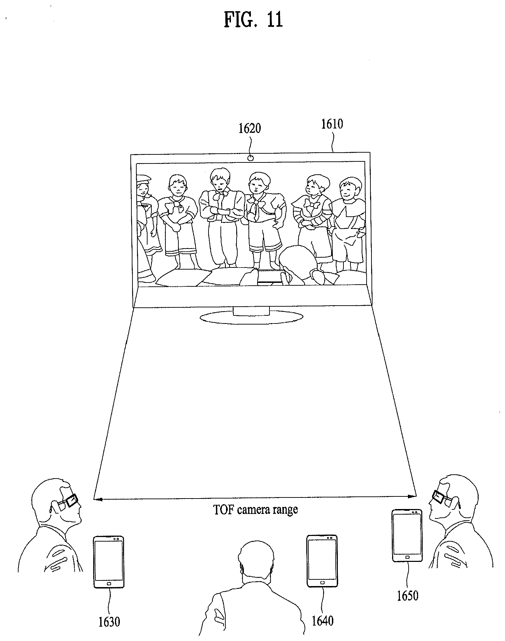

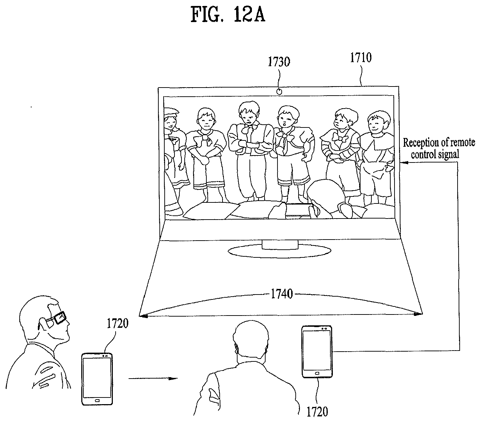

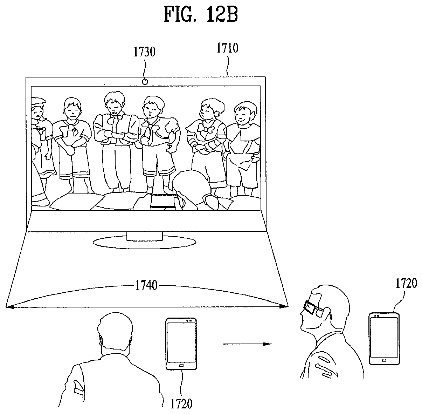

FIGS. 11, 12a and 12b are diagrams illustrating an example of performing remote control connection based on a location of an external device by means of a digital device according to one embodiment of the present invention.

As shown in FIGS. 11, 12a and 12b, the digital device 1610 may include a camera 1620. In this case, the camera 1620 may be a TOF (Time of Flight) camera. The TOF camera 1620 may sense locations of the external devices 1630, 1640 and 1650, and distances between the digital device 1610 and the external devices 1630, 1640 and 1650. The TOF system is the most general and basic distance measurement system, and obtains a distance by measuring a time difference between pulse and reflected wave and is mainly used for radar or ultrasonic sensor. A TOF based depth camera is used to obtain a depth in such a manner that a phase difference of a reflected wave is identified from a sensor, due to difficulty in generating light pulse and its high speed property. The TOF type camera may be used even outdoors, and is advantageous in that a profile may be obtained more exactly. Moreover, the camera included in the digital device 1610 may be replaced with various types of cameras in addition to the TOF camera 1620.

As shown in FIG. 11, the controller of the digital device 1610 may detect the locations of the external devices 1630, 1640 and 1650 by using the camera 1620 and receive the remote control signals from the external devices 1630, 1640 and 1650 only if the locations of the external devices 1630, 1640 and 1650 are within the range of a previously set view angle.

As shown in FIG. 12a, the controller of the digital device 1710 may receive the remote control signal from the external device 1720 located within the range of a view angle 1740 by using a camera 1730 if the external device 1720 moves within the range of the previously set view angle 1740. However, as shown in FIG. 12b, the controller of the digital device 1710 may block the remote control signal from the external device 1720 located within the range of the view angle 1740 by using the camera 1730 if the external device 1720 moves out of the range of the previously set view angle 1740.

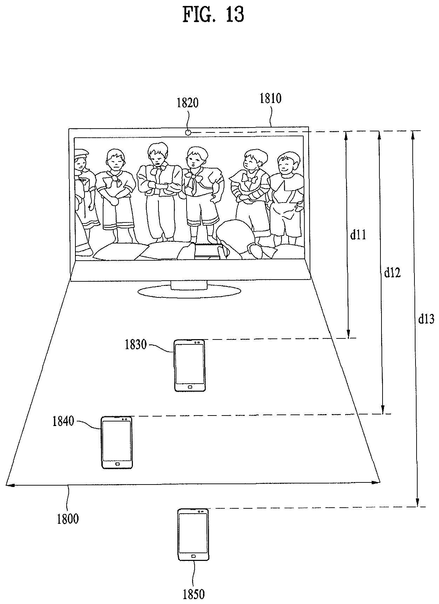

FIG. 13 is a diagram illustrating an example of performing remote control connection based on a location and distance of an external device by means of a digital device according to one embodiment of the present invention.

As shown in FIG. 13, the digital device 1810 may include a camera 1820. In this case, the camera 1820 may be a TOF (Time of Flight) camera. The TOF camera 1820 may sense locations of the external devices 1830, 1840 and 1850, and distances between the digital device 1810 and the external devices 1830, 1840 and 1850. The controller of the digital device 1810 may detect the locations of the external devices 1830, 1840 and 1850 by using the camera 1820 and receive the remote control signals from the external devices 1830, 1840 and 1850 only if the locations of the external devices 1830, 1840 and 1850 are within the range of a previously set view angle. The controller of the digital device 1810 measures the distances between the external devices 1830, 1840 and 1850 and the digital device 1810 and then determines priorities in accordance with the measured distances, whereby the operation of the digital device 1810 may be controlled in accordance with the remote control signal having the highest priority of the determined priorities. As shown in FIG. 13, the controller of the digital device 1810 may receive the remote control signal of the external device 1830 which has a distance d11 closest to the digital device 1810, and may block the remote control signals of the other external devices 1840 and 1850, which have distances d12 and d13 far away from the digital device 1810.

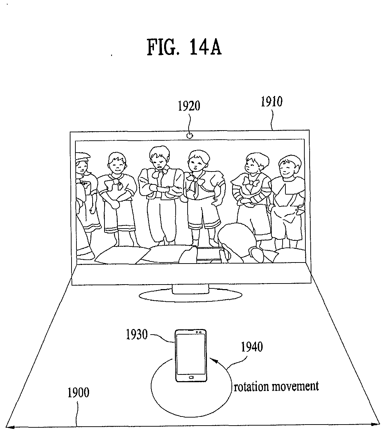

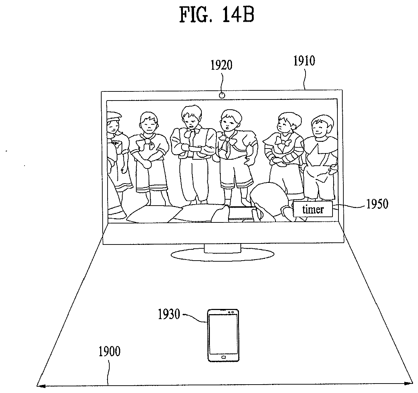

FIGS. 14a and 14b are diagrams illustrating an example of performing remote control connection based on a specific motion of an external device by means of a digital device according to one embodiment of the present invention.

As shown in FIGS. 14a and 14b, the digital device 1910 may include a camera 1920. The controller of the digital device 1910 may detect a motion operation of the external device 1930 by using the camera 1920 when the remote control signal is received from the external device 1920, identify whether a key code included in the received remote control signal is a unique key code if the detected motion operation of the external device 1930 is a specific motion 1940 for remote control, and then control the operation of the digital device 1910 in accordance with the remote control signal. For example, as shown in FIG. 14a, if the specific motion 1040 operation is an operation for drawing a circle and the external device 1930 performs the motion operation for drawing a circle, the controller of the digital device 1910 may detect the motion operation for drawing a circle from the external device 1930 and receive the remote control signal of the external device 1930 if it is determined that the detected motion operation is a specific motion. For another example, as shown in FIG. 14b, when the remote control signal is received from the external device 1930, the controller of the digital device 1910 may detect whether the external device 1930 is maintained in a horizontal direction for a certain time, by using the camera 1920 and a timer 1950. If the detected external device 1930 is maintained in a horizontal direction for a certain time, the controller of the digital device 1910 may identify whether the key code included in the received remote control signal is a unique key code and then control the operation of the digital device 1910 in accordance with the remote control signal. For example, if the external device 1930 is maintained toward the digital device 1910 for about 3 seconds, the controller of the digital device 1910 may receive the remote control signal of the external device 1930 by using the camera 1920 and the timer 1950. In this case, the controller of the digital device 1910 may control the digital device 1910 to receive the remote control signal from the external device 1930 only when the external device 1030 performs a specific motion operation within the range of a previously set view angle 1900.

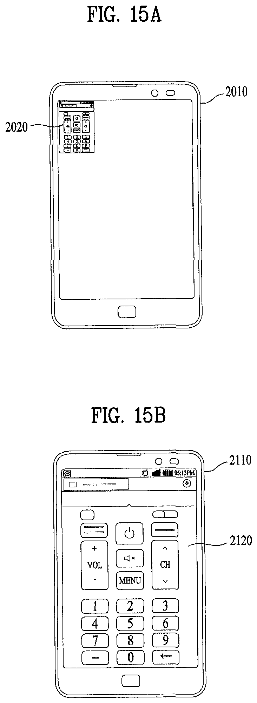

FIGS. 15a to 15c are diagrams illustrating a remote window of a remote application executed by an external device according to one embodiment of the present invention.

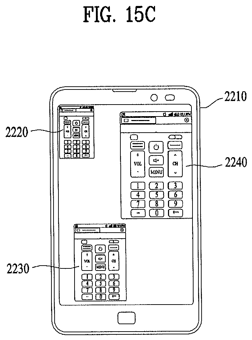

As shown in FIGS. 15a to 15c, the external device 2010 may periodically transmit a signal, which includes a specific key code, after receiving a radio signal. In this case, the external device 2010 may periodically transmit the signal, which includes a specific key code, only when a specific motion operation is performed, or may periodically transmit the signal, which includes a specific key code, only when the external device is maintained in a horizontal direction for a certain time. If a unique key code for remote control is received, the external device 2010 may execute the remote application automatically. Also, if the radio signal that includes remote control related information is received, the external device 2010 may identify whether the remote application may be executed, by analyzing the remote control related information. If the remote application may be executed, the external device 2010 may identify whether signal strength of the received radio signal is a reference value or more, and may execute the remote application automatically if signal strength of the radio signal is the reference value or more. In this case, the external device 2010 may use a previously stored key code or a key code included in the received radio signal when executing the remote application. Also, as shown in FIG. 15a, the external device 2010 may display a remote application icon 2020 on a corner of a screen in the form of icon when executing the remote application, and may display a remote window on the entire screen by activating the remote window if the user selects the remote application icon 2020. In this case, as shown in FIG. 15b, if the radio signal is received from one digital device, the external device 2110 may display a single remote window 2120 on the entire screen by activating the remote window 2120. As the case may be, if a plurality of radio signals are received from a plurality of digital devices, the external device 2110 may execute the plurality of remote applications corresponding to the respective digital devices automatically if the plurality of radio signals are received from the plurality of digital devices. In this case, as shown in FIG. 15c, the external device 2210 may display a plurality of remote windows 2220, 2230 and 2240 corresponding to the plurality of remote applications on the screen when automatically executing the plurality of remote applications. At this time, sizes of the plurality of remote windows 2220, 2230 and 2240 may be varied depending on signal strength of the received radio signals.

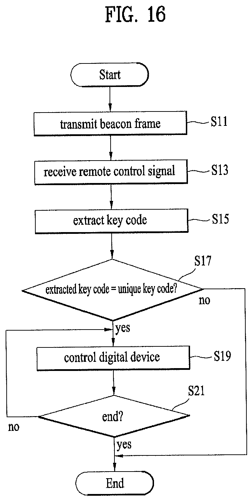

FIG. 16 is a flow chart illustrating a control method of a digital device according to one embodiment of the present invention.

As shown in FIG. 16, the controller of the digital device may transmit a radio signal that includes remote control related information (S11). In this case, the remote control related information may be at least any one of a manufacturer name of the digital device, a model name of the digital device, a setup name of the digital device, a remote control unique key code of the digital device, information as to whether use of a remote application has been accepted, and information as to whether infrared transmission and reception may be performed. Also, the controller of the digital device may periodically transmit the radio signal that includes remote control related information. And, if the radio signal that includes remote control related information is received, the external device may identify whether the remote application may be executed, by analyzing the remote control related information. If the remote application may be executed, the external device may identify whether signal strength of the received radio signal is a reference value or more, and may execute the remote application automatically if signal strength of the radio signal is the reference value or more. Subsequently, the external device may display a remote window corresponding to the remote application, and may transmit the remote control signal to the digital device in accordance with a user input. Next, the controller of the digital device may receive the remote control signal from the external device that has received the radio signal (S13). In this case, the controller of the digital device may receive the remote control signal from the external device when the remote control signal is an infrared signal for remote control. Next, the controller of the digital device may extract a key code from the received remote control signal (S15). Subsequently, the controller of the digital device compares the extracted key code with the previously stored unique key code (S17). If the extracted key code is the same as the previously stored unique key code, the controller of the digital device may control the operation of the digital device in accordance with the remote control signal (S19). Subsequently, the controller of the digital device may identify whether remote control connection ends, from the external device (S21), and may end remote control connection if there is no remote control signal for a predetermined time or an end signal is received.

Therefore, the digital device according to the present invention may transmit the radio signal that includes remote control related information, and may receive the remote control signal from the external devices that have activated the remote application by receiving the radio signal, whereby remote control may be performed simply and conveniently through the various external devices that have activated the remote application.

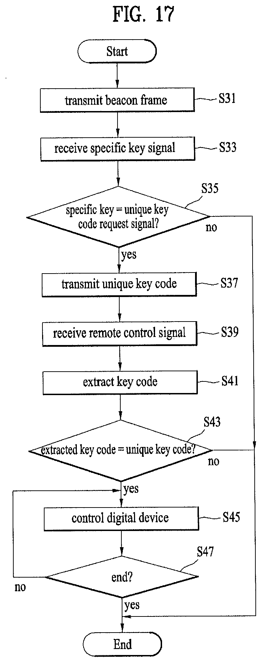

FIG. 17 is a flow chart illustrating a control method of a digital device according to another embodiment of the present invention.

As shown in FIG. 17, the controller of the digital device may transmit a radio signal that includes remote control related information (S31). In this case, the remote control related information may be at least any one of a manufacturer name of the digital device, a model name of the digital device, a setup name of the digital device, a remote control unique key code of the digital device, information as to whether use of a remote application has been accepted, and information as to whether infrared transmission and reception may be performed. Also, the controller of the digital device may periodically transmit the radio signal that includes remote control related information. Subsequently, the controller of the digital device may receive a signal, which includes a specific key code, from the external device that has received the radio signal (S33). In this case, the external device may periodically transmit the signal, which includes a specific key code, after receiving the radio signal. As the case may be, the external device may periodically transmit the signal, which includes a specific key code, only when a specific motion operation is performed. As another case, the external device may periodically transmit the signal, which includes a specific key code, only when the external device is maintained in a horizontal direction for a certain time. Next, the controller of the digital device detects the specific key code and identifies whether the detected specific key code is a unique key code request signal for remote control (S35). Then, if the detected specific key code is a unique key code request signal for remote control, the controller of the digital device transmits the unique key code for remote control (S37). In this case, the external device executes the remote application automatically if the unique key code for remote control is received. The external device may display a remote window corresponding to the remote application on the screen and transmit the remote control signal to the digital device in accordance with a user input. Next, the controller of the digital device may receive the remote control signal from the external device that has received the radio signal (S39). In this case, the controller of the digital device may receive the remote control signal from the external device when the remote control signal is an infrared signal for remote control. Next, the controller of the digital device may extract a key code from the received remote control signal (S41). Subsequently, the controller of the digital device compares the extracted key code with the previously stored unique key code (S43). If the extracted key code is the same as the previously stored unique key code, the controller of the digital device may control the operation of the digital device in accordance with the remote control signal (S45). Subsequently, the controller of the digital device may identify whether remote control connection ends, from the external device (S47), and may end remote control connection if there is no remote control signal for a predetermined time or an end signal is received.

Therefore, the digital device according to the present invention may transmit the unique key for remote control, which corresponds to the specific key, if the specific key for activating the remote application is received from the external device, thereby providing convenience to the user by reflecting whether the remote application of the external device has been activated.

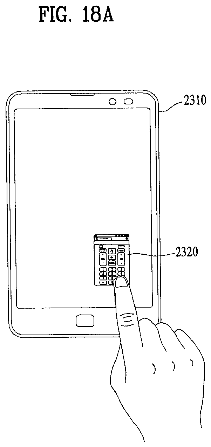

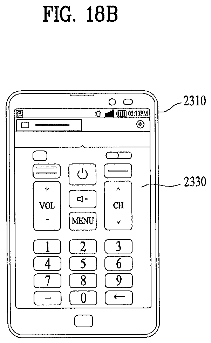

FIGS. 18a and 18b are diagrams illustrating a remote window of a remote application executed by an external device according to another embodiment of the present invention.

As shown in FIGS. 18a and 18b, the external device 2310 may periodically transmit a signal, which includes a specific key code, after receiving a radio signal. In this case, the external device 2310 may periodically transmit the signal, which includes a specific key code, only when a specific motion operation is performed, or may periodically transmit the signal, which includes a specific key code, only when the external device is maintained in a horizontal direction for a certain time. If a unique key code for remote control is received, the external device 2310 may execute the remote application automatically. Also, if the radio signal that includes remote control related information is received, the external device 2310 may identify whether the remote application may be executed, by analyzing the remote control related information. If the remote application may be executed, the external device 2310 may identify whether signal strength of the received radio signal is a reference value or more, and may execute the remote application automatically if signal strength of the radio signal is the reference value or more. In this case, the external device 2310 may use a previously stored key code or a key code included in the received radio signal when executing the remote application. Also, as shown in FIG. 18a, the external device 2310 may display a remote application icon 2320 on a screen in the form of icon when executing the remote application, and may display a remote window 2330 on the screen by activating the remote window 2330 if the user touches the remote application icon 2320, as shown in FIG. 18b.

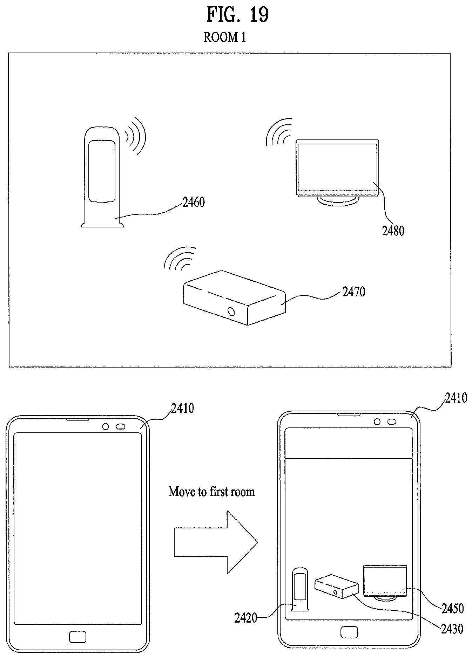

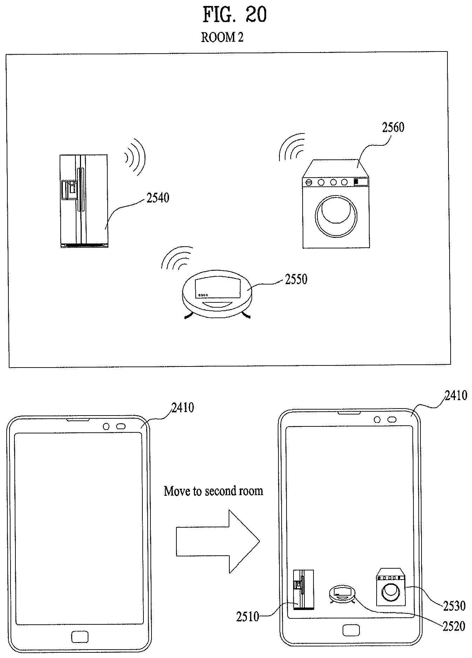

FIGS. 19 and 20 are diagrams illustrating a remote application executed in accordance with a location of an external device according to one embodiment of the present invention.

As shown in FIG. 19, a plurality of digital devices may be arranged in a first room indoors. For example, the first digital device 2460 which is an air conditioner, the second digital device 2470 which is a DVD player, and the third digital device 2480 which is a TV may be arranged. In this case, each of the first, second and third digital devices 2460, 2470 and 2480 may transmit its respective radio signal which includes remote control related information and is different from the other ones. If the external device 2410 moves from the outside to the inside of the first room, the external device 2410 may receive respective radio signals, each of which includes remote control related information, from the first, second and third digital devices 2460, 2470 and 2480. Subsequently, the external device 2410 may execute remote applications corresponding to the first, second and third digital devices 2460, 2470 and 2480 by using each key code included in the received radio signals. In this case, the external device 2410 may display first, second and third remote application icons 2420, 2430 and 2450 on a screen in the form of icon. For example, the first remote application icon 2420 is a remote application corresponding to the first digital device 2460 which is an air conditioner, the second remote application icon 2430 is a remote application corresponding to the second digital device 2470 which is a DVD player, and the third remote application icon 2450 is a remote application corresponding to the third digital device 2480 which is a TV. Therefore, the user may conveniently and remotely control the desired digital device by selecting one of the first, second and third remote application icons 2420, 2430 and 2450.

Also, as shown in FIG. 20, a plurality of digital devices may be arranged in a second room indoors. For example, the fourth digital device 2540 which is a refrigerator, the fifth digital device 2550 which is a robot cleaner, and the fifth digital device 2560 which is a washing machine may be arranged. In this case, each of the fourth, fifth and sixth digital devices 2540, 2550 and 2560 may transmit its respective radio signal which includes remote control related information and is different from the other ones. If the external device 2410 moves from the outside to the inside of the second room, the external device 2410 may receive respective radio signals, each of which includes remote control related information, from the fourth, fifth and sixth digital devices 2540, 2550 and 2560. Subsequently, the external device 2410 may execute remote applications corresponding to the fourth, fifth and sixth digital devices 2540, 2550 and 2560 by using each key code included in the received radio signals. In this case, the external device 2410 may display fourth, fifth and sixth remote application icons 2510, 2520 and 2560 on a screen in the form of icon. For example, the fourth remote application icon 2510 is a remote application corresponding to the fourth digital device 2540 which is a refrigerator, the fifth remote application icon 2520 is a remote application corresponding to the fifth digital device 2550 which is a robot cleaner, and the sixth remote application icon 2530 is a remote application corresponding to the sixth digital device 2560 which is a washing machine. Therefore, the user may conveniently and remotely control the desired digital device by selecting one of the fourth, fifth and sixth remote application icons 2510, 2520 and 2530.

Therefore, according to the present invention, the user may simply and conveniently perform remote control by selecting the desired device of the plurality of digital devices through the external device that has activated the remote application by receiving the radio signal.

### Mode for carrying out the Invention

The digital device and the control method therefor disclosed in this specification are not limited to the aforementioned embodiments, and all or some of the aforementioned embodiments may selectively be configured in combination so that various modifications may be made in the aforementioned embodiments.

Meanwhile, the control method of the digital device disclosed in this specification may be implemented in a recording medium, which may be read by a processor provided in the digital device, as a code that can be read by the processor. The recording medium that can be read by the processor includes all kinds of recording media in which data that can be read by the processor are stored. Examples of the recording medium include a ROM, a RAM, a CD-ROM, a magnetic tape, a floppy disk, and an optical data memory. Also, another example of the recording medium may be implemented in a shape of carrier wave such as transmission through Internet. Also, the recording medium that can be read by the processor may be distributed in a computer system connected thereto through a network, whereby codes that can be read by the processor may be stored and implemented in a distributive mode.

It will be apparent to those skilled in the art that the present specification can be embodied in other specific forms without departing from the essential characteristics of the specification. Thus, the above embodiments are to be considered in all respects as illustrative and not restrictive. The scope of the specification should be determined by reasonable interpretation of the appended claims.

### Industrial Applicability

The present invention relates to a digital device and a control method therefor, in which a remote application of an external device may be executed automatically using a radio signal. Therefore, the present invention has industrial applicability.

## Claims

1. A digital device (1410) comprising:
a communication module configured to transmit remote control related information;
a storage module configured to store the remote control related information; and
a controller configured to control an operation of the digital device,
wherein the controller is configured to:
transmit a radio signal that includes the remote control related information;
receive a remote control signal from an external device (1420, 1430, 1440), which has received the radio signal; and
control an operation of the digital device in accordance with the remote control signal if a key code included in the received remote control signal is a unique key code,
**characterized in that** the digital device comprises a camera and **in that** the controller is configured to:
detect the location of the external device by using the camera when a plurality of remote control signals are received from a plurality of external devices;
determine priorities in accordance with the detected location of the external device; and
control the operation of the digital device in accordance with the remote control signal of the external device, which has the highest priority of the determined priorities.

2. The digital device according to claim 1, wherein the remote control related information is at least any one of a manufacturer name of the digital device, a model name of the digital device, a setup name of the digital device, a remote control unique key code of the digital device, information as to whether use of a remote application has been accepted, and information as to whether infrared transmission and reception may be performed.

3. The digital device according to claim 1, wherein the controller is configured to periodically transmit the radio signal that includes the remote control related information.

4. The digital device according to claim 1, wherein the controller is configured to receive the remote control signal from the external device when the remote control signal is an infrared signal for remote control.

5. The digital device according to claim 1, wherein the controller is configured to extract a key code from the received remote control signal, compare the extracted key code with a previously stored unique key code and then controls the operation of the digital device in accordance with the remote control signal if the extracted key code is the same as the previously stored unique key code.

6. The digital device according to claim 1, wherein the controller is configured to detect a location of the external device, and receives the remote control signal from the external device only if the location of the external device is within the range of a previously set view angle.

7. The digital device according to claim 1, wherein the controller is configured to detect a motion operation of the external device by using the camera when the remote control signal is received from the external device, identify whether the key code included in the received remote control signal is a unique key code if the motion operation of the external device is a specific motion for remote control, and then control the operation of the digital device in accordance with the remote control signal.

8. The digital device according to claim 1, wherein the controller is configured to detect whether the external device is maintained in a horizontal direction for a certain time, by using the camera when the remote control signal is received from the external device, identify whether the key code included in the received remote control signal is a unique key code if the detected external device is maintained in a horizontal direction for a certain time, and then control the operation of the digital device in accordance with the remote control signal.

9. The digital device according to claim 1, wherein the controller is configured to detect a specific key code if a signal, which includes the specific key code, is received from the external device that has received the radio signal, and transmit the unique key for remote control if the detected specific key code is a unique key code request signal for remote control.

10. A control method of a system including a digital device (1410) and an external device (1420, 1430, 1440), comprising the steps of:
transmitting a radio signal that includes remote control related information;
receiving a remote control signal from an external device that has received the radio signal;
extracting a key code from the received remote control signal;
comparing the extracted key code with a previously stored unique key code; and
controlling an operation of the digital device in accordance with the remote control signal if the extracted key code is the same as the previously stored unique key code,
**characterized by** further comprising the steps of:
detecting the location of the external device by using a camera when a plurality of remote control signals are received from the plurality of external devices;
determining priorities in accordance with the detected location of the external device; and
controlling the operation of the digital device in accordance with the remote control signal of the external device, which has the highest priority of the determined priorities.

## Patentansprüche

1. Digitales Gerät (1410), umfassend:
ein Kommunikationsmodul, das zum Senden einer Fernsteuerungs-bezogenen Information eingerichtet ist;
ein Speichermodul, das zum Speichern der Fernsteuerungs-bezogenen Information eingerichtet ist; und
eine Steuerung, die zum Steuern eines Betriebs der digitalen Vorrichtung eingerichtet ist,
wobei die Steuerung eingerichtet ist zum:
Senden eines Funksignals, das die Fernsteuerungs-bezogene Information beinhaltet;
Empfangen eines Fernsteuerungssignals von einem externen Gerät (1420, 1430, 1440), welches das Funksignal empfangen hat; und
Steuern eines Betriebs des digitalen Geräts in Übereinstimmung mit dem Fernsteuerungssignal, wenn ein in dem empfangenen Fernsteuerungssignal enthaltener Code-Schlüssel ein einzigartiger Code-Schlüssel ist;
**dadurch gekennzeichnet, dass** das digitale Gerät eine Kamera umfasst und dass die Steuerung eingerichtet ist zum:
Detektieren der Position des externen Geräts durch Verwenden der Kamera, wenn eine Vielzahl von Fernsteuersignalen von einer Vielzahl von externen Geräten empfangen wurde;
Ermitteln von Prioritäten in Übereinstimmung mit den detektierten Positionen des externen Geräts; und
Steuern des Betriebs des digitalen Geräts in Übereinstimmung mit dem Fernsteuerungssignal des externen Geräts, das die höchste Priorität der ermittelten Prioritäten aufweist.

2. Digitales Gerät nach Anspruch 1, wobei die Fernsteuerungs-bezogene Information wenigstens eines von einem Herstellernamen des digitalen Geräts, einem Modellnamen des digitalen Geräts, einem Einstellungsnamen des digitalen Geräts, einem einzigartigen Fernsteuerungscode des digitalen Geräts, einer Information, ob eine Verwendung einer Remote-Anwendung akzeptiert wurde, und einer Information ist, ob Infrarot-Übertragung und -Empfang durchgeführt wurde.

3. Digitales Gerät nach Anspruch 1, wobei die Steuerung zum periodischen Senden des Funksignals eingerichtet ist, das die Fernsteuerungs-bezogene Information beinhaltet.

4. Digitales Gerät nach Anspruch 1, wobei die Steuerung zum Empfangen des Fernsteuerungssignals von dem externen Gerät eingerichtet ist, wenn das Fernsteuerungssignal ein Infrarot-Signal zur Fernsteuerung ist.

5. Digitales Gerät nach Anspruch 1, wobei die Steuerung zum Extrahieren eines Code-Schlüssels von dem empfangenen Fernsteuerungssignal, zum Vergleichen des extrahierten Code-Schlüssels mit einem vorher gespeicherten einzigartigen Code-Schlüssel und dann Steuern des Betriebs des digitalen Geräts in Übereinstimmung mit dem Fernsteuerungssignal eingerichtet ist, wenn der extrahierte Code-Schlüssel derselbe als der vorher gespeicherte einzigartige Code-Schlüssel ist.

6. Digitales Gerät nach Anspruch 1, wobei die Steuerung nur dann zum Detektieren einer Position des externen Geräts, und zum Empfangen des Fernsteuerungssignals von dem externen Gerät eingerichtet ist, wenn die Position des externen Geräts innerhalb der Reichweite eines vorher festgelegten Satzes von Betrachtungswinkeln ist.

7. Digitales Gerät nach Anspruch 1, wobei die Steuerung eingerichtet ist zum Detektieren eines Bewegungsbetriebs des externen Geräts durch Verwenden der Kamera, wenn das Fernsteuerungssignal von dem externen Gerät empfangen wird, Identifizieren, ob der in dem Fernsteuerungssignal enthaltene Code-Schlüssel ein einzigartiger Code-Schlüssel ist, wenn der Bewegungsbetrieb des externen Geräts eine spezielle Bewegung zur Fernsteuerung ist, und dann Steuern der Anwendung des digitalen Geräts in Übereinstimmung mit dem Fernsteuerungssignal.

8. Digitales Gerät nach Anspruch 1, wobei die Steuerung eingerichtet ist zum Detektieren, ob das externe Gerät in einer horizontalen Richtung für eine bestimmte Zeit gehalten wird, durch Verwenden der Kamera, wenn das Fernsteuerungssignal von dem externen Gerät empfangen wird, zum Identifizieren, ob der in dem Fernsteuerungssignal enthaltene Schlüssel-Code ein einzigartiger Schlüssel-Code ist, wenn das detektierten externe Gerät in einer horizontalen Richtung für eine bestimmte Zeit gehalten wird, und dann Steuern des Betriebs des digitalen Geräts in Übereinstimmung mit dem Fernsteuerungssignal.

9. Digitales Gerät nach Anspruch 1, wobei die Steuerung eingerichtet ist zum Detektieren eines speziellen Code-Schlüssels, wenn ein Signal, welches den speziellen Code-Schlüssel beinhaltet, von dem externen Gerät empfangen wurde, welches das Funksignal empfangen hat, und Senden des einzigartigen Schlüssels zum Fernsteuern, wenn der detektierte speziellen Code-Schlüssel ein einzigartiges Code-Schlüssel-Anfrage-Signal ist.

10. Steuerungsverfahren eines Systems, das ein digitales Gerät (1410) und ein externes Gerät (1420, 1430, 1440) beinhaltet, umfassend die Schritte:
Senden eines Funksignals, das eine Fernsteuerungs-bezogene Information beinhaltet;
Empfangen eines Fernsteuerungssignals von einem externen Gerät, welches das Funksignal empfangen hat;
Extrahieren eines Code-Schlüssels aus dem empfangenen Fernsteuerungssignal;
Vergleichen des extrahierten Code-Schlüssels mit einem vorher gespeicherten einzigartigen Code-Schlüssels; und
Steuern eines Betriebs des digitalen Geräts in Übereinstimmung mit dem Fernsteuerungssignal, wenn der extrahierte Code-Schlüssel derselbe als der vorher gespeicherte einzigartige Code-Schlüssel ist,
**gekennzeichnet durch** weiter umfassend die Schritte:
Detektieren der Position des externen Geräts durch Verwenden einer Kamera, wenn eine Vielzahl von Fernsteuersignalen von der Vielzahl von externen Geräten empfangen wurde;
Ermitteln von Prioritäten in Übereinstimmung mit den detektierten Positionen des externen Geräts; und
Steuern des Betriebs des digitalen Geräts in Übereinstimmung mit dem Fernsteuerungssignal des externen Geräts, das die höchste Priorität der ermittelten Prioritäten aufweist.

## Revendications

1. Dispositif numérique (1410) comprenant :
un module de communication configuré pour transmettre des informations se rapportant à une commande à distance ;
un module de stockage configuré pour stocker les informations se rapportant à une commande à distance ; et
un contrôleur configuré pour commander un fonctionnement du dispositif numérique,
dans lequel le contrôleur est configuré pour :
transmettre un signal radio qui inclut les informations se rapportant à une commande à distance ;
recevoir un signal de commande à distance depuis un dispositif externe (1420, 1430, 1440), qui a reçu le signal radio ; et
commander un fonctionnement du dispositif numérique conformément au signal de commande à distance si un code clé inclus dans le signal de commande à distance reçu est un code clé unique,
**caractérisé en ce que** le dispositif numérique comprend une caméra et **en ce que** le contrôleur est configuré pour :
détecter l'emplacement du dispositif externe en utilisant la caméra lorsqu'une pluralité de signaux de commande à distance sont reçus d'une pluralité de dispositifs externes ;
déterminer des priorités conformément à l'emplacement détecté du dispositif externe ; et
commander le fonctionnement du dispositif numérique conformément au signal de commande à distance du dispositif externe, qui a la priorité la plus élevée des priorités déterminées.

2. Dispositif numérique selon la revendication 1, dans lequel les informations se rapportant à une commande à distance sont au moins l'un(e) quelconque parmi un nom de fabricant du dispositif numérique, un nom de modèle du dispositif numérique, un nom de configuration du dispositif numérique, un code clé unique de commande à distance du dispositif numérique, une information quant à savoir si l'utilisation d'une application distante a été acceptée, et une information quant à savoir si une transmission et une réception par infrarouges peuvent être exécutées.

3. Dispositif numérique selon la revendication 1, dans lequel le contrôleur est configuré pour transmettre périodiquement le signal radio qui inclut les informations se rapportant à une commande à distance.

4. Dispositif numérique selon la revendication 1, dans lequel le contrôleur est configuré pour recevoir le signal de commande à distance depuis le dispositif externe lorsque le signal de commande à distance est un signal infrarouge pour commande à distance.

5. Dispositif numérique selon la revendication 1, dans lequel le contrôleur est configuré pour extraire un code clé du signal de commande à distance reçu, comparer le code clé extrait avec un code clé unique précédemment stocké et ensuite commande le fonctionnement du dispositif numérique conformément au signal de commande à distance si le code clé extrait est le même que le code clé unique précédemment stocké.

6. Dispositif numérique selon la revendication 1, dans lequel le contrôleur est configuré pour détecter un emplacement du dispositif externe, et reçoit le signal de commande à distance du dispositif externe uniquement si l'emplacement du dispositif externe est à l'intérieur d'une plage d'un angle de vue précédemment fixé.

7. Dispositif numérique selon la revendication 1, dans lequel le contrôleur est configuré pour détecter une opération de mouvement du dispositif externe en utilisant la caméra lorsque le signal de commande à distance est reçu depuis le dispositif externe, identifier si le code clé inclus dans le signal de commande à distance reçu est un code clé unique si l'opération de mouvement du dispositif externe est un mouvement spécifique pour commande à distance, et ensuite commander le fonctionnement du dispositif numérique conformément au signal de commande à distance.

8. Dispositif numérique selon la revendication 1, dans lequel le contrôleur est configuré pour détecter si le dispositif externe est maintenu dans un sens horizontal pendant un certain temps, en utilisant la caméra lorsque le signal de commande à distance est reçu depuis le dispositif externe, identifier si le code clé inclus dans le signal de commande à distance reçu est un code clé unique si le dispositif externe détecté est maintenu dans un sens horizontal pendant un certain temps, et ensuite commander le fonctionnement du dispositif numérique conformément au signal de commande à distance.

9. Dispositif numérique selon la revendication 1, dans lequel le contrôleur est configuré pour détecter un code clé spécifique si un signal, qui inclut le code clé spécifique, est reçu depuis le dispositif externe qui a reçu le signal radio, et transmettre la clé unique pour commande à distance si le code clé spécifique détecté est un signal de demande de code clé unique pour commande à distance.

10. Procédé de commande d'un système incluant un dispositif numérique (1410) et un dispositif externe (1420, 1430, 1440), comprenant les étapes de :
transmission d'un signal radio qui inclut des informations se rapportant à une commande à distance ;
réception d'un signal de commande à distance depuis un dispositif externe qui a reçu le signal radio ;
extraction d'un code clé du signal de commande à distance reçu ;
comparaison du code clé extrait avec un code clé unique précédemment stocké ; et
commande d'un fonctionnement du dispositif numérique conformément au signal de commande à distance si le code clé extrait est le même que le code clé unique précédemment stocké,
**caractérisé en ce que** comprenant en outre les étapes de :
détection de l'emplacement du dispositif externe en utilisant une caméra lorsqu'une pluralité de signaux de commande à distance sont reçus de la pluralité de dispositifs externes ;
détermination de priorités conformément à l'emplacement détecté du dispositif externe ; et
commande du fonctionnement du dispositif numérique conformément au signal de commande à distance du dispositif externe, qui a la priorité la plus élevée des priorités déterminées.
